# EUROPEAN PATENT SPECIFICATION

(11) **EP 4 175 387 B1**
(45) Date of publication and mention of the grant of the patent: **23.10.2024**
(21) Application number: 21832239.4
(22) Date of filing: 17.06.2021
(51) Int. Cl.: H04W 72/12, H04W 72/54, H04L 43/065, H04W 72/21, H04L 43/0888

(54) **DATA SCHEDULING METHOD AND APPARATUS, AND COMPUTER READABLE STORAGE MEDIUM**
DATENPLANUNGSVERFAHREN UND -VORRICHTUNG UND COMPUTERLESBARES SPEICHERMEDIUM
PROCÉDÉ ET APPAREIL DE PLANIFICATION DE DONNÉES, ET SUPPORT DE STOCKAGE LISIBLE PAR ORDINATEUR

(30) Priority: 30.06.2020 CN 202010622572
(43) Date of publication of application: 03.05.2023
(73) Proprietor: ZTE Corporation, Shenzhen, Guangdong 518057 (CN)
(72) Inventor: LEI, Chaoqin, Shenzhen, Guangdong 518057 (CN)
(74) Representative: Osterhoff, Utz
(86) International application number: PCT/CN2021/100750
(87) International publication number: WO 2022/001687

(56) References cited:
- EP-A1- 2 611 230
- EP-A1- 3 255 813
- CN-A- 108 631 847
- CN-A- 109 547 278
- CN-A- 109 547 278
- CN-A- 110 249 658
- CN-A- 111 052 624
- US-A1- 2016 007 212
- US-A1- 2016 134 408

## Description

### TECHNICAL FIELD

Embodiments of the present application relate to the field of wireless communication, and in particular to a data scheduling method, a data scheduling device and a computer readable storage medium.

### BACKGROUND

The super-cell consists of multiple cell-portions (conventional cell), and each CP shares resources of the super-cell, including physical-layer cell identities (PCI), time domain resources, frequency domain resources, etc. In the actual network, the CP in the super-cell often has two antennas and supports different number of transmitting antenna ports, that is, some CPs in the super-cell have M antennas and support downlink transmission of PM ports, some CPs have N antennas and support downlink transmission of PN ports, but such situation cannot be identified by the terminal, then the base station often is only configured with a set of a periodic channel-state information reference signal CSI-RS (CSI-RS) for a measurement feedback of a channel quality indicator(CQI), a precoding matrix indicator (PMI) and a rank indicator (RI) of the user equipment.

The prior-art patent application CN 109 547 278 discloses a method and device for improving a super cell network throughput. Channel quality information is reported by a mobile terminal in the super cell. A base station generates port configuration set information based on each original cell port configuration in the super cell and transmits it to the mobile terminal. The mobile terminal schedules at least two ports configured by the original cell according to the received port configuration set information.

### SUMMARY

Embodiments of the present application aim to provide a data scheduling method, a data scheduling device and a computer readable storage medium that enables accurate scheduling of the base station, to maximize data throughput in the super-cell.

Embodiments of the present application provide a data scheduling method, including: obtaining a number of first characteristic signal ports and a number of second characteristic signal ports of a super-cell, wherein the number of first characteristic signal ports is a maximum number of configurable ports of a first sub-cell in the super-cell and the number of the second characteristic signal ports is a maximum number of configurable ports of a second sub-cell in the super-cell; configuring a first channel-state information reference signal and a second channel-state information reference signal for a user equipment accessed to the super-cell, wherein the number of ports of the first channel-state information reference signal is equal to the number of the first characteristic signal ports, the number of ports of the second channel-state information reference signal is equal to the number of the second characteristic signal ports; triggering, by the first channel-state information reference signal, the user equipment to report first channel characteristic parameters; determining whether to activate the second channel-state information reference signal according to a maximum number of configurable ports of a sub-cell where the user equipment belongs to; in response to not activating the second channel-state information reference signal, performing physical downlink shared channel (PDSCH) scheduling for the user equipment according to the first channel characteristic parameters; and in response to activating the second channel-state information reference signal, triggering, by the second channel-state information reference signal, the user equipment to report second channel characteristic parameters, and performing the PDSCH scheduling for the user equipment according to the second channel characteristic parameters.

Embodiments of the present application further provide a data scheduling device, including: at least one processor; and a memory communicated with the at least one processor; the memory stores instructions executable by the at least one processor, the instructions are executed by the at least one processor to enable the at least one processor to perform the data scheduling method described above.

Embodiments of the present application further provide a computer-readable storage medium storing a computer-execuable instruction that when executed by a processor causes the processor to perform the data scheduling method described above.

### BRIEF DESCRIPTION OF THE DRAWINGS

One or more embodiments are illustrated exemplarily by the accompanying drawings; these exemplary illustrations do not constitute a limitation of the embodiments, and elements having the same reference number in the drawings are indicated as similar elements, and the drawings do not constitute a limitation of scale unless specifically stated.
FIG. 1 is a flowchart of a data scheduling method according to a first embodiment of the present application.
FIG. 2 is a flowchart of a data scheduling method according to a second embodiment of the present application.
FIG. 3 is a flowchart of a data scheduling method according to a third embodiment of the present application.
FIG. 4 is a schematic structural diagram of the data scheduling device according to a fourth embodiment of the present application.

### DETAILED DESCRIPTION OF THE EMBODIMENTS

In order to make the purpose, technical solutions and advantages of the embodiments of the present application clearer, each embodiment of the present application will be described in detail below in conjunction with the accompanying drawings. However, it will be understood by those skilled in the art that in each embodiment of the present application, many technical details are presented to enable the reader to better understand the application. However, even without these technical details and various variations and modifications based on the following embodiments, the technical solutions claimed to be protected by the present application can be achieved.

The inventors found that: if the configured number of CSI-RS ports is equal to the smaller value of PM and PN, the RI reported by the user equipment is limited by the smaller value of PM and PN, the scheduling may lose the layer number of the user equipment and thus lose the traffic of the user equipment; if the configured number of CSI-RS ports is equal to the larger value of PM and PN, the RI reported by the user equipment may be larger than the smaller value of PM and PN, thus if the user equipment is within the CP coverage of the smaller value of PM and PN, the reported RI may be larger than the smaller value of PM and PN, then the reported value obtained by the base station is inaccurate, then the base station cannot accurately schedule according to the value reported by the user equipment, and thus the traffic of the user equipment is lost.

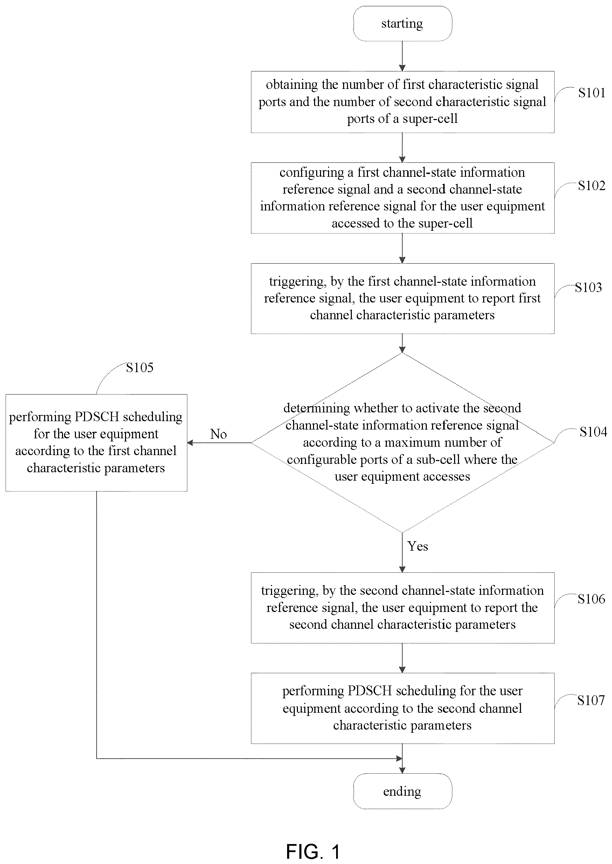

In order to solve the above technical problem, the first embodiment of the present application relates to a data scheduling method, the flowchart shown in FIG. 1 includes: S101: obtaining the number of first characteristic signal ports and the number of second characteristic signal ports of a super-cell.

In some situations, the super-cell is formed by K neighboring conventional cells (K is an integer greater than or equal to 2), and the value of K can be selected according to the hardware capability, computational complexity, etc. The conventional cells composing the super-cell have two different numbers of antennas. In the embodiment, the super-cell is composed of the first sub-cell and the second sub-cell, the number of the first characteristic signal ports is a maximum number of configurable ports of the first sub-cell, and the number of second characteristic signal ports is a maximum number of configurable ports of the second sub-cell.

The maximum number of configurable ports differs for cells with different number of antennas, and for the same sub-cell, the number of antennas of sub-cell is not necessarily related to the maximum number of configurable ports. In some situations, if the first sub-cell has 4 antennas, the maximum number of configurable ports of the first sub-cell can be 4; if the first sub-cell has 64 antennas, the maximum number of configurable ports of the first sub-cell can be 8.

S102: configuring a first channel-state information reference signal and a second channel-state information reference signal for the user equipment accessed to the super-cell.

In some situations, the number of first characteristic signal ports in the embodiment is greater than the number of second characteristic signal ports, the number of ports of the first channel-state information reference signal is equal to the number of first characteristic signal ports, the first channel-state information reference signal is a periodic feedback signal, and the second channel-state information reference signal is a non-periodic feedback signal.

As the non-periodic feedback signal, the second channel-state information reference signal with a set of ports equal to the number of the second characteristic signal ports can be configured separately, or the first channel-state information reference signal with a set of ports equal to the number of the first characteristic signal ports can be used.

S103: triggering, by the first channel-state information reference signal, the user equipment to report first channel characteristic parameters.

In some situations, since the first channel-state information reference signal is a periodic feedback signal, the first channel-state information reference signal can periodically trigger the user equipment to report the first channel characteristic parameters.

The channel characteristic parameters in the embodiment include one of or any combination of: a channel quality indicator, a precoding matrix indicator, and a rank indicator. In the embodiment, the user equipment reports all the above three channel characteristic parameters to the base station.

S104: determining whether to activate the second channel-state information reference signal according to a maximum number of configurable ports of a sub-cell where the user equipment accesses, and performing operation S105 in response to not activing the second channel-state information reference signal; otherwise, performing operation S106.

S105: performing PDSCH scheduling for the user equipment according to the first channel characteristic parameters.

Regarding operations S104 to S105, in some situations, the embodiment may determine the sub-cell where the user equipment belongs to according to the following: obtaining signal strength of the user equipment received by the first sub-cell and the second sub-cell, and taking a cell that receives greatest signal strength of the user equipment as the sub-cell where the user equipment belongs to. It is understood that the actual sub-cell in which the user equipment is located may change, so the embodiment will periodically obtain the signal strength of the user equipment received by the first sub-cell and the second sub-cell to avoid determining that the user equipment is still in the previous sub-cell even after the previous sub-cell in which the user equipment is located has changed, to improve the accuracy of the data scheduling method.

S106: triggering, by the second channel-state information reference signal, the user equipment to report the second channel characteristic parameters.

S107: performing PDSCH scheduling for the user equipment according to the second channel characteristic parameters.

Regarding operations S106 to S107, in some situations, since the second channel-state information reference signal is a non-periodic feedback signal, the second channel-state information reference signal will be inactive in advance and will only be active when specific conditions are met.

In general, when having only one set of channel-state information reference signals, if the number of ports of the configured channel-state information reference signal is equal to the number of the second characteristic signal ports (the number of the first characteristic signal ports is larger than the number of the second characteristic signal ports), when the user equipment is within the coverage area of the first sub-cell, the reported channel characteristic parameters are limited by the number of the second characteristic signal ports, and the scheduling loses the layer number of the user equipment; if the number of ports of the configured channel-state information reference signal is equal to the number of the first characteristic signal ports, when the user equipment is in the coverage area of the second sub-cell, the reported channel characteristic parameters may be larger than the number of the second characteristic signal ports, then the reported value obtained by the base station is inaccurate, and at this time the base station cannot accurately schedule according to the reported value by the user equipment, thus the traffic of the user equipment is lost. In the embodiment, two sets of channel-state information reference signals are configured, when the user equipment is in the coverage area of the first sub-cell, the user equipment is triggered by the first channel-state information reference signal to report the first channel characteristic parameters, and because the number of the ports of the first channel-state information reference signal is equal to the maximum number of configurable ports of the first sub-cell, the scheduling of the base station will not lose the layer number of the user equipment, thus when the user equipment is in the coverage area of the second sub-cell, the user equipment is triggered by the second channel-state information reference signal to report the second channel characteristic parameters, and because the number of ports of the second channel-state information reference signal is equal to the maximum number of configurable ports of the second sub-cell, the channel characteristic parameters reported by the user equipment is not larger than the maximum number of the configurable ports of the second sub-cell. The reported value obtained by the base station is accurate, and the base station can then accurately perform scheduling according to the reports of the user equipment.

The embodiment of the present application, relative to the related technology, pre-configures the first channel-state information reference signal and the second channel-state information reference signal for the user equipment accessed to the super-cell (the super-cell includes the first sub-cell and the second sub-cell), and the number of ports of the first channel-state information reference signal is equal to the maximum number of configurable ports of the first sub-cell, the number of ports of the second channel-state information reference signal is equal to the maximum number of configurable ports of the second sub-cell, so that there are multiple sets of the channel-state information reference signals; whether to activate the second channel-state information reference signal is determined according to the maximum number of configurable ports of the sub-cell where the user equipment belongs to, so that when the user equipment enters different sub-cells, the corresponding channel-state information reference signal triggers the user equipment to report the corresponding channel characteristic parameters, which can enable the base station to obtain reasonable and effective values reported by the user equipment, and the base station can perform accurate scheduling, so that there is no loss in the traffic of the user equipment and the data throughput of the super-cell is maximized.

A second embodiment of the present application relates to a data scheduling method, the second embodiment is a further description of the first embodiment. A feasible method for determining whether to activate a second channel-state information reference signal according to the maximum number of configurable ports in the sub-cell accessed by the user equipment when the greatest signal strength of the user equipment is received by the second sub-cell (i.e., the user equipment belongs to the second sub-cell).

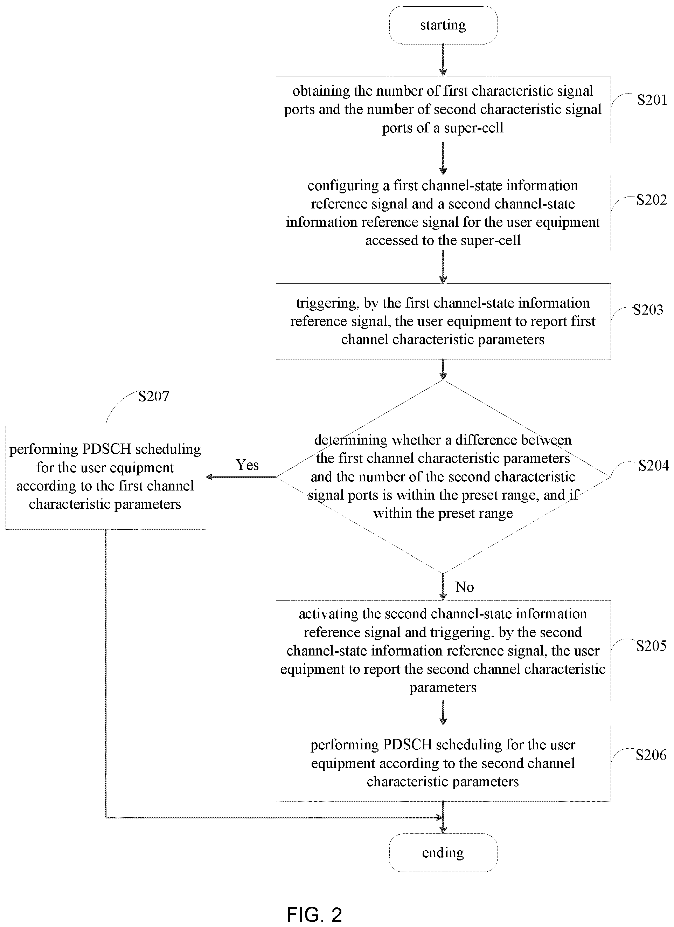

The specific process of the embodiment is shown in FIG. 2 and includes:
S201: obtaining the number of first characteristic signal ports and the number of second characteristic signal ports of the super-cell.
S202: configuring a first channel-state information reference signal and a second channel-state information reference signal for the user equipment accessed to the super-cell.
S203: triggering, by the first channel-state information reference signal, the user equipment to report first channel characteristic parameters.

Operations S201 to S203 in the embodiment are similar to operations S101 to S103 in the first embodiment, and will not be repeated here.

S204: determining whether a difference between the first channel characteristic parameters and the number of the second characteristic signal ports is within the preset range, and if within the preset range, performing operation S207; otherwise, performing operation S205.

In some situations, the first channel characteristic parameters in the embodiment include at least a rank indicator; determining whether the difference between the first channel characteristic parameters and the number of the second characteristic signal ports is within the preset range may be: determining whether the rank indicator is not greater than the number of second characteristic signal ports, not activating the second channel-state information reference signal when the rank indicator is not greater than the number of the second characteristic signal ports; otherwise, activating the second channel-state information reference signal.

S205: activating the second channel-state information reference signal and triggering, by the second channel-state information reference signal, the user equipment to report the second channel characteristic parameters.

S206: performing PDSCH scheduling for the user equipment according to the second channel characteristic parameters.

S207: performing PDSCH scheduling for the user equipment according to the first channel characteristic parameters.

For easy understanding, the following takes 4 first characteristic signal ports, 2 second characteristic signal ports, 4 antennas of the first sub-cell, and 2 antennas of the second sub-cell as an example to illustrate the data scheduling method of the embodiment.
1. After the user equipment is accessed to the sub-cell, the user equipment is configured to feedback a channel-state information reference signal measured by a channel quality indicator, a precoding matrix indicator and a rank indicator. The maximum number of configurable ports of the first channel-state information reference signal in the first sub-cell is 4, and the maximum number of configurable ports of the second channel-state information reference signal in the second sub-cell is 2. The channel-state information reference signal is needed for the user equipment to measure the feedback of the channel quality indicator, the precoding matrix indicator and the rank indicator. The user equipment is configured with a set of the first channel-state information reference signal with 4 ports as the measurement channel-state information reference signal for the periodic feedback of the channel quality indicator, the precoding matrix indicator and the rank indicator, and a set of measurement channel-state information reference signal for the non-periodic feedback of the channel quality indicator, the precoding matrix indicator and the rank indicator. The non-periodic feedback second channel-state information reference signal using the above 4 ports of the first channel-state information reference signal plus the maximum rank indicator equates to 2.
2. During the access of the user equipment and the normal service process after access, the activation CP of the user equipment is determined periodically, assuming that the greatest signal strength of the user equipment is received by the second sub-cell, the second sub-cell is where the user equipment belongs to.
3. The first channel-state information reference signal of 4 ports triggers the user equipment to report the channel quality indicator, the precoding matrix indicator and the rank indicator.
4. If the rank indicator reported by the user equipment is not greater than 2, the base station performs PDSCH scheduling according to the channel quality indicator, precoding matrix indicator and rank indicator reported by the user equipment, and the downlink weights can be the corresponding weights of any two orthogonal ports of the reported 4 ports. If the rank indicator reported by the user equipment is greater than 2, the user equipment is triggered to report non-periodic channel quality indicator, precoding matrix indicator and rank indicator, and the channel-state information reference signal required for non-periodic measurement is the second channel-state information reference signal reported non-periodically. After obtaining the channel quality indicator, precoding matrix indicator and rank indicator reported non-periodically by the user equipment, the base station performs PDSCH scheduling according to the channel quality indicator, the precoding matrix indicator and the rank indicator reported non-periodically.

Taking 8 first characteristic signal ports, 2 second characteristic signal ports, 64 antennas of the first sub-cell and 2 antennas of the second sub-cell as examples, the data scheduling method in the embodiment is illustrated by specific examples as follows.
1. After the user equipment is accessed to the sub-cell, the user equipment is configured to feedback a channel-state information reference signal measured by the channel quality indicator, the precoding matrix indicator and a rank indicator. The maximum number of configurable ports of the first channel-state information reference signal in the first sub-cell is 8, and the maximum number of configurable ports of the second channel-state information reference signal in the second sub-cell is 2. The channel-state information reference signal is needed for the user equipment to measure the feedback of the channel quality indicator, the precoding matrix indicator and the rank indicator. The user equipment is configured with a set of the first channel-state information reference signal with 4 ports as the measurement channel-state information reference signal for the periodic feedback of the channel quality indicator, the precoding matrix indicator and the rank indicator, and a set of measurement channel-state information reference signal for the non-periodic feedback of the channel quality indicator, the precoding matrix indicator and the rank indicator. The non-periodic feedback second channel-state information reference signal using the above 8 ports of the first channel-state information reference signal plus the maximum rank indicator equates to 2.
2. During the access of the user equipment and the normal service process after access, the activation CP of the user equipment is determined periodically, assuming that the greatest signal strength of the user equipment is received by the second sub-cell, the second sub-cell is where the user equipment belongs to.
3. The first channel-state information reference signal of 8 ports triggers the user equipment to report the channel quality indicator, the precoding matrix indicator and the rank indicator.
4. If the rank indicator reported by the user equipment is not greater than 2, the base station performs PDSCH scheduling according to the channel quality indicator, precoding matrix indicator and rank indicator reported by the user equipment, and the downlink weights can be the corresponding weights of any two orthogonal ports of the reported 8 ports. If the rank indicator reported by the user equipment is greater than 2, the user equipment is triggered to report non-periodic channel quality indicator, precoding matrix indicator and rank indicator, and the channel-state information reference signal required for non-periodic measurement is the second channel-state information reference signal reported non-periodically. After obtaining the channel quality indicator, precoding matrix indicator and rank indicator reported non-periodically by the user equipment, the base station performs PDSCH scheduling according to the channel quality indicator, the precoding matrix indicator and the rank indicator reported non-periodically.

The embodiment of the present application pre-configures the first channel-state information reference signal and the second channel-state information reference signal for the user equipment accessed to the super-cell (the super-cell includes the first sub-cell and the second sub-cell), and the number of ports of the first channel-state information reference signal is equal to the maximum number of configurable ports of the first sub-cell, the number of ports of the second channel-state information reference signal is equal to the maximum number of configurable ports of the second sub-cell, so that there are multiple sets of the channel-state information reference signals; whether to activate the second channel-state information reference signal is determined according to the maximum number of configurable ports of the sub-cell where the user equipment belongs to, so that when the user equipment enters different sub-cells, the corresponding channel-state information reference signal triggers the user equipment to report the corresponding channel characteristic parameters, which can enable the base station to obtain reasonable and effective values reported by the user equipment, and the base station can perform accurate scheduling, so that there is no loss in the traffic of the user equipment and the data throughput of the super-cell is maximized.

A third embodiment of the present application relates to a data scheduling method, and the third embodiment is a further description of the first embodiment, another feasible method for determining whether to activate a second channel-state information reference signal according to the maximum number of configurable ports in the sub-cell accessed by the user equipment when the greatest signal strength of the user equipment is received by the second sub-cell (i.e., the user equipment belongs to the second sub-cell).

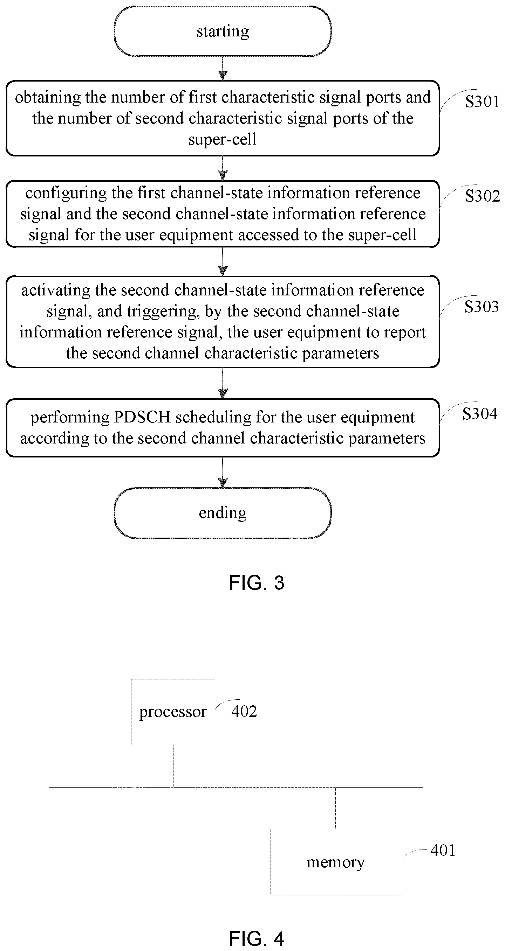

The specific process of the embodiment is shown in FIG. 3 and includes:
S301: obtaining the number of first characteristic signal ports and the number of second characteristic signal ports of the super-cell.
S302: configuring the first channel-state information reference signal and the second channel-state information reference signal for the user equipment accessed to the super-cell.

Operations S301 to S302 in the embodiment are similar to operations S101 to S102 in the first embodiment, and will not be repeated here.

S303: activating the second channel-state information reference signal, and triggering, by the second channel-state information reference signal, the user equipment to report the second channel characteristic parameters.

S304: performing PDSCH scheduling for the user equipment according to the second channel characteristic parameters.

Regarding operations S303 to S303, in some situations, when the user is in the second sub-cell with a smaller number of ports, the second channel-state information reference signal is directly activated and the PDSCH scheduling is performed for the user equipment according to the second channel characteristic parameters, which can improve the efficiency of the data scheduling method of the embodiment and reduce the workload.

For easy understanding, the following takes 4 first characteristic signal ports, 2 second characteristic signal ports, 4 antennas of the first sub-cell, and 2 antennas of the second sub-cell as an example to illustrate the data scheduling method of the embodiment.
1. After the user equipment is accessed to the sub-cell, the user equipment is configured to feedback a channel-state information reference signal measured by a channel quality indicator, a precoding matrix indicator and a rank indicator. The maximum number of configurable ports of the first channel-state information reference signal in the first sub-cell is 4, and the maximum number of configurable ports of the second channel-state information reference signal in the second sub-cell is 2. The channel-state information reference signal is needed for the user equipment to measure the feedback of the channel quality indicator, the precoding matrix indicator and the rank indicator. The user equipment is configured with a set of the first channel-state information reference signal with 4 ports as the measurement channel-state information reference signal for the periodic feedback of the channel quality indicator, the precoding matrix indicator and the rank indicator, and a set of measurement channel-state information reference signal for the non-periodic feedback of the channel quality indicator, the precoding matrix indicator and the rank indicator. The non-periodic feedback second channel-state information reference signal using the above 4 ports of the first channel-state information reference signal plus the maximum rank indicator equates to 2.
2. During the access of the user equipment and the normal service process after access, the activation CP of the user equipment is determined periodically, assuming that the greatest signal strength of the user equipment is received by the second sub-cell, the second sub-cell is where the user equipment belongs to.
3. The first channel-state information reference signal of 4 ports triggers the user equipment to report the channel quality indicator, the precoding matrix indicator and the rank indicator.
4. If the user equipment is in the second sub-cell, the user equipment is triggered to report non-periodic channel quality indicator, precoding matrix indicator and rank indicator. The channel-state information reference signal required for non-periodic measurement is the second channel-state information reference signal reported non-periodically. After obtaining the channel quality indicator, the precoding matrix indicator and the rank indicator reported non-periodically by the user equipment, the base station performs PDSCH scheduling according to the channel quality indicator, the precoding matrix indicator and the rank indicator reported non-periodically.

The embodiment of the present application, relative to the related technology, pre-configures the first channel-state information reference signal and the second channel-state information reference signal for the user equipment accessed to the super-cell (the super-cell includes the first sub-cell and the second sub-cell), and the number of ports of the first channel-state information reference signal is equal to the maximum number of configurable ports of the first sub-cell, the number of ports of the second channel-state information reference signal is equal to the maximum number of configurable ports of the second sub-cell, so that there are multiple sets of the channel-state information reference signals; whether to activate the second channel-state information reference signal is determined according to the maximum number of configurable ports of the sub-cell where the user equipment belongs to, so that when the user equipment enters different sub-cells, the corresponding channel-state information reference signal triggers the user equipment to report the corresponding channel characteristic parameters, which can enable the base station to obtain reasonable and effective values reported by the user equipment, and the base station can perform accurate scheduling, so that there is no loss in the traffic of the user equipment and the data throughput of the super-cell is maximized.

A fourth embodiment of the present application relates to a data scheduling device, as shown in FIG. 4, including:
at least one processor 401; and
a memory 402 communicated with the at least one processor 401;
the memory 402 stores instructions executable by the at least one processor 401, the instructions are executed by the at least one processor 401 to enable the at least one processor 401 to perform the data scheduling method described above.

The memory 402 and the processor 401 are connected by a bus, and the bus may include any number of interconnected buses and bridges, the bus connects one or more processors 401 to various circuits of the memory 402 together. The bus may also connect together various other circuits such as peripherals, voltage regulators, and power management circuits, all of which are well known in the art and therefore will not be further described herein. The bus interface provides an interface between the bus and the transceiver. The transceiver may be a single element or a plurality of elements, such as a plurality of receivers and transmitters, providing units for communicating with various other devices on a transmission medium. Data processed by processor 401 is transmitted over the wireless medium via an antenna, and the antenna also receives the data and transmits it to processor 401.

The processor 401 is responsible for managing the bus and the usual processing, and may also provide various functions including timing, peripheral interfaces, voltage regulation, power management, and other control functions. The memory 402 may be used to store data used by processor 401 in performing operations.

A fifth embodiment of the present application relates to a computer readable storage medium that stores a computer program. The computer program implements the method described above when executed by the processor.

That is, it is understood by those skilled in the art that all or some of the operations in the method of the above embodiments can be accomplished by instructing the relevant hardware by a program stored in a storage medium, the program includes a number of instructions to cause a device (which may be a microcontroller, chip, etc.) or processor (processor) to perform all or some of the operations of the method described in the various embodiments of the present application. The aforementioned storage medium include: a USB flash drive, a mobile hard disk, a read-only memory (ROM), a random access memory (RAM), a disk or CD-ROM, and other medium that can store program code.

Those skilled in the art can understand that the above embodiments are specific embodiments for realizing the present application, and in practical application, various changes can be made to them in form and details without deviating from scope of the present application.

## Claims

1. A data scheduling method, comprising:
(S101), obtaining a number of first characteristic signal ports and a number of second characteristic signal ports of a super-cell, wherein the number of first characteristic signal ports is a maximum number of configurable ports of a first sub-cell in the super-cell and the number of the second characteristic signal ports is a maximum number of configurable ports of a second sub-cell in the super-cell;
(S102), configuring a first channel-state information reference signal and a second channel-state information reference signal for a user equipment accessed to the super-cell, wherein the number of ports of the first channel-state information reference signal is equal to the number of the first characteristic signal ports, the number of ports of the second channel-state information reference signal is equal to the number of the second characteristic signal ports; the data scheduling method, **characterized by** comprising:
(S103), triggering, by the first channel-state information reference signal, the user equipment to report first channel characteristic parameters;
(S104), determining whether to activate the second channel-state information reference signal according to a maximum number of configurable ports of a sub-cell where the user equipment belongs to;
(S105), in response to not activating the second channel-state information reference signal, performing physical downlink shared channel, PDSCH, scheduling for the user equipment according to the first channel characteristic parameters; and
(S106), in response to activating the second channel-state information reference signal, triggering, by the second channel-state information reference signal, the user equipment to report second channel characteristic parameters, and performing the PDSCH scheduling for the user equipment according to the second channel characteristic parameters.

2. The data scheduling method according to claim 1, wherein before (S104), determining whether to activate the second channel-state information reference signal according to the number of configurable ports of the sub-cell where the user equipment belongs to, the method further comprises:
obtaining signal strength of the user equipment received by the first sub-cell and the second sub-cell, and taking a cell that receives greatest signal strength of the user equipment as the sub-cell where the user equipment belongs to.

3. The data scheduling method according to claim 2, wherein the greatest signal strength of the user equipment is received by the first sub-cell, the (S104), determining whether to activate the second channel-state information reference signal according to the maximum number of configurable ports of the sub-cell where the user equipment belongs to comprises:
not activating the second channel-state information reference signal.

4. The data scheduling method according to claim 2, wherein the greatest signal strength of the user equipment is received by the second sub-cell, the determining (S104), whether to activate the second channel-state information reference signal according to the maximum number of configurable ports of the sub-cell where the user equipment belongs to comprises:
(S204), determining whether a difference between the first channel characteristic parameters and the number of second characteristic signal ports is within a preset range;
(S207), not activating the second channel-state information reference signal in response that the difference is within the preset range; and
(S205), activating the second channel-state information reference signal in response that the difference is not within the preset range.

5. The data scheduling method according to claim 4, wherein the first channel characteristic parameters at least comprise: a rank indicator; the (S204), determining whether the difference between the first channel characteristic parameters and the number of second characteristic signal ports is within the preset range comprises:
determining whether the rank indicator is not greater than the number of the second characteristic signal ports;
not activating the second channel-state information reference signal in response that the rank indicator is not greater than the number of the second characteristic signal ports; and
activating the second channel-state information reference signal in response that the rank indicator is greater than the number of the second characteristic signal ports.

6. The data scheduling method according to claim 2, wherein the greatest signal strength of the user equipment is received by the first sub-cell, the (S104), determining whether to activate the second channel-state information reference signal according to the number of the first characteristic signal ports comprises:
not activating the second channel-state information reference signal.

7. The data scheduling method according to claim 2, wherein the greatest signal strength of the user equipment is received by the second sub-cell, the (S104), determining whether to activate the second channel-state information reference signal according to the number of the first characteristic signal ports comprises:
activating the second channel-state information reference signal.

8. The data scheduling method according to any one of claims 1 to 7, wherein the channel characteristic parameters comprise one of or any combination of:
a channel quality indicator, a precoding matrix indicator, and a rank indicator.

9. A data scheduling device, comprising
at least one processor (401); and
a memory (402) communicated with the at least one processor (401);
wherein the memory (402) stores instructions executable by the at least one processor (401), the instructions are executed by the at least one processor (401) to enable the at least one processor (401) to perform the data scheduling method according to any one of claims 1 to 8.

10. A computer-readable storage medium, storing a computer-execuable instruction that when executed by a processor causes the processor to perform the data scheduling method according to any one of claims 1 to 8.

## Patentansprüche

1. Verfahren zur Datenplanung, das Folgendes umfasst:
(S101), Erhalten einer Anzahl von ersten charakteristischen Signalports und einer Anzahl von zweiten charakteristischen Signalports einer Superzelle, wobei die Anzahl der ersten charakteristischen Signalports eine maximale Anzahl von konfigurierbaren Ports einer ersten Unterzelle in der Superzelle ist und die Anzahl der zweiten charakteristischen Signalports eine maximale Anzahl von konfigurierbaren Ports einer zweiten Unterzelle in der Superzelle ist;
(S 102), Konfigurieren eines ersten Kanalzustands-Informationsreferenzsignals und eines zweiten Kanalzustands-Informationsreferenzsignals für ein Benutzergerät, das auf die Superzelle zugreift, wobei die Anzahl der Ports des ersten Kanalzustands-Informationsreferenzsignals gleich der Anzahl der ersten charakteristischen Signalports ist, die Anzahl der Ports des zweiten Kanalzustands-Informationsreferenzsignals gleich der Anzahl der zweiten charakteristischen Signalports ist, **dadurch gekennzeichnet, dass** es umfasst:
(S103), Auslösen des Benutzergeräts durch das erste Kanalzustands-Informationsreferenzsignal, um erste Kanalcharakteristikparameter zu melden;
(S104), Bestimmen, ob das zweite Kanalzustands-Informationsreferenzsignal gemäß einer maximalen Anzahl von konfigurierbaren Ports einer Unterzelle, zu der das Benutzergerät gehört, aktiviert werden soll;
(S 105), als Reaktion darauf, dass das zweite Kanalzustands-Informationsreferenzsignal nicht aktiviert wird, Durchführen eines PDSCH (Physical Downlink Shared Channel)-Planung für das Benutzergerät gemäß den ersten Kanalcharakteristikparameter; und
(S106), als Reaktion darauf, dass das zweite Kanalzustands-Informationsreferenzsignal aktiviert wird, Auslösen des Benutzergeräts durch das zweite Kanalzustands-Informationsreferenzsignal, um zweite Kanalcharakteristikparameter zu melden, und Durchführen der PDSCH-Planung für das Benutzergerät gemäß den zweiten Kanalcharakteristikparameter.

2. Verfahren zur Datenplanung nach Anspruch 1, wobei das Verfahren vor (S104), dem Bestimmen, ob das zweite Kanalzustands-Informationsreferenzsignal gemäß der Anzahl von konfigurierbaren Ports einer Unterzelle, zu der das Benutzergerät gehört, aktiviert werden soll, ferner umfasst:
Erhalten der Signalstärke des Benutzergeräts, die von der ersten Unterzelle und der zweiten Unterzelle empfangen wird, und Wählen einer Zelle, die die größte Signalstärke des Benutzergeräts empfängt, als die Unterzelle, zu der das Benutzergerät gehört.

3. Verfahren zur Datenplanung nach Anspruch 2, wobei die größte Signalstärke des Benutzergeräts von der ersten Unterzelle empfangen wird, wobei das Bestimmen (S104), ob das zweite Kanalzustands-Informationsreferenzsignal gemäß der maximale Anzahl von konfigurierbaren Ports einer Unterzelle, zu der das Benutzergerät gehört, aktiviert werden soll, ferner umfasst:
Nicht-Aktivieren des zweiten Kanalzustands-Informationsreferenzsignals.

4. Verfahren zur Datenplanung nach Anspruch 2, wobei die größte Signalstärke des Benutzergeräts von der zweiten Unterzelle empfangen wird, wobei das Bestimmen (S104), ob das zweite Kanalzustands-Informationsreferenzsignal gemäß der maximale Anzahl von konfigurierbaren Ports einer Unterzelle, zu der das Benutzergerät gehört, aktiviert werden soll, ferner umfasst:
(S204), Bestimmen, ob eine Differenz zwischen den ersten Kanalcharakteristikparameter und der Anzahl der zweiten charakteristischen Signalports innerhalb eines voreingestellten Bereichs liegt;
(S207), Nicht-Aktivieren des zweiten Kanalzustands-Informationsreferenzsignals als Reaktion darauf, dass die Differenz innerhalb des voreingestellten Bereichs liegt; und
(S205), Aktivieren des zweiten Kanalzustands-Informationsreferenzsignals als Reaktion darauf, dass die Differenz nicht innerhalb des voreingestellten Bereichs liegt.

5. Verfahren zur Datenplanung nach Anspruch 4, wobei die ersten Kanalcharakteristikparameter zumindest umfassen: einen Rangindikator; wobei das Bestimmen (S204), ob die Differenz zwischen den ersten Kanalcharakteristikparameter und der Anzahl der zweiten charakteristischen Signalports innerhalb des voreingestellten Bereichs liegt, umfasst:
Bestimmen, ob der Rangindikator nicht größer als die Anzahl der zweiten charakteristischen Signalports ist;
Nicht-Aktivierung des zweiten Kanalzustands-Informationsreferenzsignals als Reaktion darauf, dass der Rangindikator nicht größer als die Anzahl der zweiten charakteristischen Signalports ist; und
Aktivierung des zweiten Kanalzustands-Informationsreferenzsignals als Reaktion darauf, dass der Rangindikator größer als die Anzahl der zweiten charakteristischen Signalports ist; und

6. Verfahren zur Datenplanung nach Anspruch 2, wobei die größte Signalstärke des Benutzergeräts von der ersten Unterzelle empfangen wird, wobei das Bestimmen (S204), ob das zweite Kanalzustands-Informationsreferenzsignal gemäß der Anzahl von charakteristischen Signalport aktiviert werden soll, ferner umfasst:
Nicht-Aktivieren des zweiten Kanalzustands-Informationsreferenzsignals.

7. Verfahren zur Datenplanung nach Anspruch 2, wobei die größte Signalstärke des Benutzergeräts von der zweiten Unterzelle empfangen wird, wobei das Bestimmen (S204), ob das zweite Kanalzustands-Informationsreferenzsignal gemäß der Anzahl von charakteristischen Signalport aktiviert werden soll, ferner umfasst:
Aktivieren des zweiten Kanalzustands-Informationsreferenzsignals.

8. Verfahren zur Datenplanung nach einem der Ansprüche 1 bis 7, wobei die Kanalcharakteristikparameter einen oder eine beliebige Kombination der folgenden Parameter umfassen:
einen Kanalqualitätsindikator, einen Vorcodierungsmatrixindikator und einen Rangindikator.

9. Vorrichtung zur Datenplanung, das Folgendes umfasst:
mindestens einen Prozessor (401); und
einen Speicher (402), der mit dem mindestens einen Prozessor (401) verbunden ist;
wobei der Speicher (402) Anweisungen speichert, die von dem mindestens einen Prozessor (401) ausführbar sind, wobei die Anweisungen von dem mindestens einen Prozessor (401) ausgeführt werden, um den mindestens einen Prozessor (401) in die Lage zu versetzen, das Verfahren zur Datenplanung nach einem der Ansprüche 1 bis 8 durchzuführen.

10. Computerlesbares Speichermedium, das eine computerausführbare Anweisung speichert, die, wenn sie von einem Prozessor ausgeführt wird, den Prozessor dazu veranlasst, das Verfahren zur Datenplanung nach einem der Ansprüche 1 bis 8 auszuführen.

## Revendications

1. Procédé d'ordonnancement de données, comprenant :
(S101), obtenir un nombre de premiers ports de signal caractéristique et un nombre de seconds ports de signal caractéristique d'une supercellule, dans lequel le nombre de premiers ports de signal caractéristique est un nombre maximal de ports configurables d'une première sous-cellule de la supercellule et le nombre de seconds ports de signal caractéristique est un nombre maximal de ports configurables d'une seconde sous-cellule de la supercellule ;
(S102), configurer un premier signal de référence d'information d'état de canal et un second signal de référence d'information d'état de canal pour un équipement utilisateur accédé à la supercellule, dans lequel le nombre de ports du premier signal de référence d'information d'état de canal est égal au nombre de premiers ports de signal caractéristique, le nombre de ports du second signal de référence d'information d'état de canal est égal au nombre de seconds ports de signal caractéristique ; le procédé d'ordonnancement de données se **caractérise en ce qu'**il comprend :
(S103), déclencher, par le premier signal de référence d'information d'état de canal, l'équipement utilisateur pour rapporter des premiers paramètres caractéristiques de canal ;
(S104), déterminer s'il faut activer le second signal de référence d'information d'état de canal en fonction d'un nombre maximal de ports configurables d'une sous-cellule à laquelle appartient l'équipement utilisateur ;
(S105), en réponse à non-activation du second signal de référence d'information d'état de canal, exécuter un ordonnancement de canal partagé de liaison descendante physique, PDSCH pour l'équipement utilisateur en fonction des premiers paramètres caractéristiques de canal ; et
(S106), en réponse à activation du second signal de référence d'information d'état de canal, déclencher, par le second signal de référence d'information d'état de canal, l'équipement d'utilisateur pour rapporter des seconds paramètres caractéristiques de canal, et effectuer un ordonnancement PDSCH pour l'équipement utilisateur en fonction des seconds paramètres caractéristiques.

2. Procédé d'ordonnancement de données selon la revendication 1, dans lequel avant l'étape (S104), déterminer s'il faut activer le second signal de référence d'information d'état de canal en fonction d'un nombre maximal de ports configurables d'une sous-cellule à laquelle appartient l'équipement utilisateur, le procédé comprend en outre :
obtenir une intensité de signal de l'équipement utilisateur reçu par la première sous-cellule et la seconde sous-cellule, et prendre une cellule qui reçoit la plus haute intensité de signal de l'équipement utilisateur comme sous-cellule à laquelle appartient l'équipement utilisateur.

3. Procédé d'ordonnancement de données selon la revendication 2, dans lequel la plus haute intensité de signal de l'équipement utilisateur est reçue par la première sous-cellule, l'étape (S104), déterminer s'il faut activer le second signal de référence d'information d'état de canal en fonction du nombre maximal de ports configurables de la sous-cellule à laquelle appartient l'équipement utilisateur comprend :
ne pas activer le second signal de référence d'information d'état de canal.

4. Procédé d'ordonnancement de données selon la revendication 2, dans lequel la plus haute intensité de signal de l'équipement utilisateur est reçue par la seconde sous-cellule, l'étape (S104), déterminer s'il faut activer le second signal de référence d'information d'état de canal en fonction du nombre maximal de ports configurables de la sous-cellule à laquelle appartient l'équipement utilisateur, comprend :
(S204), déterminer si une différence entre les premiers paramètres caractéristiques de canal et le nombre de seconds ports de signal caractéristique se situe dans une plage prédéfinie ;
(S207), ne pas activer le second signal de référence d'information d'état de canal en réponse que la différence se situe dans la plage prédéfinie ; et
(S205), activer le second signal de référence d'information d'état de canal en réponse que la différence ne se situe pas dans la plage prédéfinie.

5. Procédé d'ordonnancement de données selon la revendication 4, dans lequel les premiers paramètres caractéristiques de canal comprennent au moins : un indicateur de rang ; l'étape (S204), déterminer si la différence entre les premiers paramètres caractéristiques de canal et le nombre de seconds ports de signal caractéristique se situe dans une plage prédéfinie, comprend :
déterminer si l'indicateur de rang n'est pas supérieur au nombre de seconds ports de signal caractéristique ;
ne pas activer le second signal de référence d'information d'état de canal en réponse que l'indicateur de rang n'est pas supérieur au nombre de seconds ports de signal caractéristique ; et
activer le second signal de référence d'information d'état de canal en réponse que l'indicateur de rang est supérieur au nombre de seconds ports de signal caractéristique.

6. Procédé d'ordonnancement de données selon la revendication 2, dans lequel la plus haute intensité de signal de l'équipement utilisateur est reçue par la première sous-cellule, l'étape (S104), déterminer s'il faut activer le second signal de référence d'information d'état de canal en fonction du nombre de premiers ports de signal caractéristique comprend :
ne pas activer le second signal de référence d'information d'état de canal.

7. Procédé d'ordonnancement de données selon la revendication 2, dans lequel la plus haute intensité de signal de l'équipement utilisateur est reçue par la seconde sous-cellule, l'étape (S104), déterminer s'il faut activer le second signal de référence d'information d'état de canal en fonction du nombre de premiers ports de signal caractéristique comprend :
activer le second signal de référence d'information d'état de canal.

8. Procédé d'ordonnancement de données selon l'une quelconque des revendications 1 à 7, dans lequel les paramètres caractéristiques de canal comprennent l'un ou une quelconque combinaison de :
un indicateur de qualité de canal, un indicateur de matrice de précodage et un indicateur de rang.

9. Dispositif d'ordonnancement de données, comprenant :
au moins un processeur (401) ; et
une mémoire (402) en communication avec au moins un processeur (401) ;
dans lequel la mémoire (402) stocke des instructions exécutables par l'au moins un processeur (401), et les instructions sont exécutées par l'au moins un processeur (401), de sorte que l'au moins un processeur (401) mette en oeuvre le procédé d'ordonnancement de données selon l'une quelconque des revendications 1 à 8.

10. Support de stockage lisible par ordinateur, stockant une instruction exécutable par ordinateur, qui, lorsqu'elle est exécutée par un processeur, met en oeuvre le procédé d'ordonnancement de données selon l'une quelconque des revendications 1 à 8.
